# EUROPÄISCHE PATENTSCHRIFT

(11) **EP 0 997 660 B1**
(45) Veröffentlichungstag und Bekanntmachung des Hinweises auf die Patenterteilung: **25.01.2006**
(21) Anmeldenummer: 99121169.9
(22) Anmeldetag: 22.10.1999
(51) Int. Cl.: F16D 59/02, F16D 55/224

(54) **Teilbelag-Federdruckbremse zum Angriff an einer rotierenden Scheibe**
Partly lined spring-applied brake engaging a rotating disc
Frein à garnitures partielles en prise avec un disque tournant

(30) Priorität: 28.10.1998 DE 19849749
(43) Veröffentlichungstag der Anmeldung: 03.05.2000
(73) Patentinhaber: Chr. Mayr GmbH & Co. KG, D-87665 Mauerstetten (DE)
(72) Erfinder: Hörmann, Christian, 87600 Kaufbeuren (DE); Dropmann, Christoph, 87600 Kaufbeuren (DE)
(74) Vertreter: Ruschke, Hans Edvard

(56) Entgegenhaltungen:
- EP-A- 0 796 814
- EP-A- 0 935 082
- FR-A- 1 361 471
- FR-A- 2 392 282
- GB-A- 1 089 987
- GB-A- 1 421 039

## Beschreibung

Die Erfindung betrifft eine Teilbelag-Federdruckbremse mit den Merkmalen des Oberbegriffs des Patentanspruchs 1.

Solche Bremsen sind vielseitig verwendbar in Antrieben in Industrianlagen aller Art, Liftanlagen, Seilbahnantrieben und vielen anderen. Die Anforderungen an solche Bremsen sind hoch. Sie sollen einfach aufgebaut, kostengünstig in der Herstellung und doch zuverlässig im Betrieb sein, indem sie im Bedarfsfall sofort bremsend angreifen. Sie sollen eine lange Lebensdauer haben, lange Betriebszeiten zwischen zwei Wartungen aufweisen, einfach zu warten und zu reparieren sein sowie bei Wartung und Reparatur nur kurze Betriebsausfallzeiten verursachen.

Aus der DE-PS 27 23 984 ist eine Bremsanordnung mit Verschleißnachstellung bekannt, bei der eine Ankerscheibe verdrehbar auf einem Verstellgewinde sitzt und eine mit einem Schneckenantriebsritzel zusammenwirkende Verzahnung aufweist und zur Erfassung des Luftspaltes zwischen der Ankerscheibe und einem Elektromagneten ein Endschalter vorgesehen ist, der einen Servomotor als Antrieb für das Schneckenantriebsritzel steuert.

Aus der DE-PS 43 05 285 ist eine Teilbelag-Scheibenbremse ersichtlich mit einer Bremszange mit zwei Bremshebeln, einer Bremsfeder zum Schließen der Bremszange über ein Hebelsystem sowie einem elektromagnetischen Lüftgerät.

Die EP 0 465 831 zeigt eine Sicherheitsscheibenbremse für Aufzüge mit zwei mechanisch voneinander unabhängigen Teilsystemen in Form von zwei identischen Bremshebeln mit je einer Bremsfeder. Die Lüftfunktion erfolgt mittels eines Topfmagneten.

Diese bekannten Bremsen sind extrem kompliziert und teuer.

Die GB-A-1,421,039 zeigt eine elektromagentisch gelüftete Federdruckbremse mit einem U-förmigen Rahmen und zwei Reibbelägen zum beiderseitigen Angriff an einer rotierenden Scheibe. Der Reibbelag auf der Seite des Elektromagneten ist über einen zentralen Druckbolzen als Teil eines komplizierten Federmechanismus an die Hubbewegung der Ankerscheibe des Elektromagneten angekoppelt, wobei der Federmechanismus zugleich auch als manuell betätigbare Handlüftung für den Reibbelag dient. Nachteilig an dieser Konstruktion ist der Umstand, daß die Bremse sehr breit baut und damit viel Platz bzw. im Bereich um die abzubremsende Scheibe herum wegnimmt, was in vielen modernen Einsatzsituationen eine Verwendung dieser Bremse unmöglich macht.

Die nächstliegende EP 0 796 814 A2 zeigt ebenfalls eine elektromagnetisch gelüftete Federdruckbremse mit einem U-förmigen Rahmen und zwei Reibbelägen zum beiderseitigen Angriff auf einer rotierenden Scheibe. Der Reibbelag auf der Seite des Elektromagneten ist wiederum über einen zentralen Druckbolzen von einiger axialer Länge mit der Ankerscheibe verbunden, so daß auch in diesem Fall die Bremse sehr breit baut und unnötig viel Platz um die abzubremsende Scheibe herum beansprucht.

Grundsätzlich den gleichen Aufbau hat auch die Federdruckbremse der Figur 3 der FR 1361471, die daher ebenfalls für viele moderne Anwendungsfälle solcher Bremsen viel zu breit baut.

Hiernach kann es als die objektive Aufgabe der Erfindung angesehen werden, eine einfach aufgebaute Federdruckbremse vorzusehen, die eine abzubremsende Scheibe beidseitig umgreift und dabei vor allem platzsparend ist.

Diese Aufgabe wird gelöst durch die Merkmale nach dem Kennzeichen des Patentanspruchs 1.

Weitere Merkmale der Erfindung ergeben sich aus den Unteransprüchen.

In der Zeichnung ist ein Ausführungsbeispiel der Erfindung dargestellt. Es zeigen:
- Abb. 1: eine Schrägansicht der Gesamtanordnung;
- Abb. 2: einen axialen Längsschnitt durch eine Bremse; und
- Abb. 3: eine weitere Einzelheit im Längsschnitt.

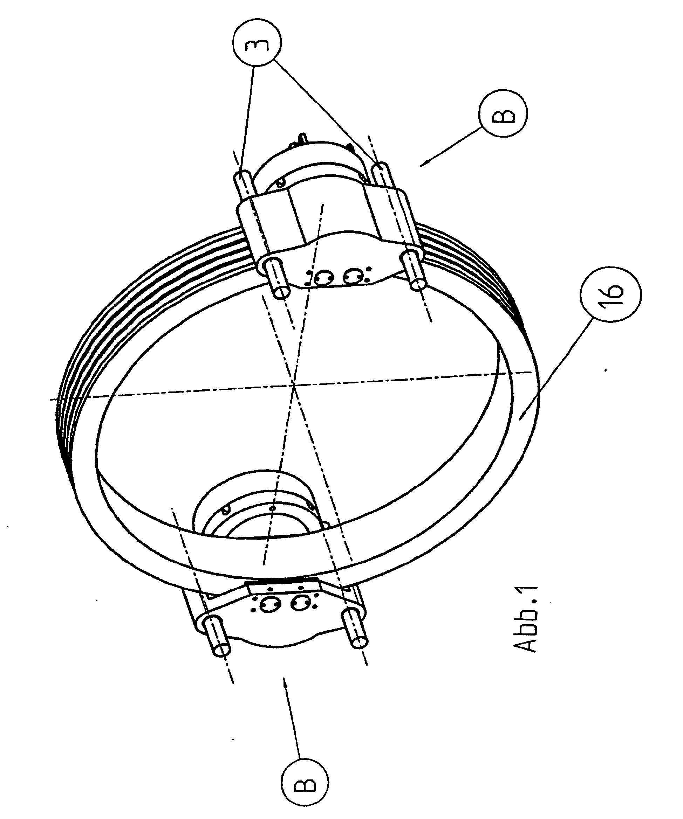

In Abb. 1 ist 16 die abzubremsende Scheibe, die die Seiltrommel einer Liftanlage, aber auch eine Riemen-, Treib-, Zahnrad- oder ähnliche Scheibe sein kann. An der Scheibe 16 sind diametral gegenüber zwei gleiche Bremsen B angeordnet. Die Bremsen B umschließen die Scheibe 16 u-förmig umgreifend und sind parallel zur Achse der Scheibe 16 verschieblich/schwimmend gelagert. Sie sind an dem Bolzen 3 begrenzt verschiebbar.

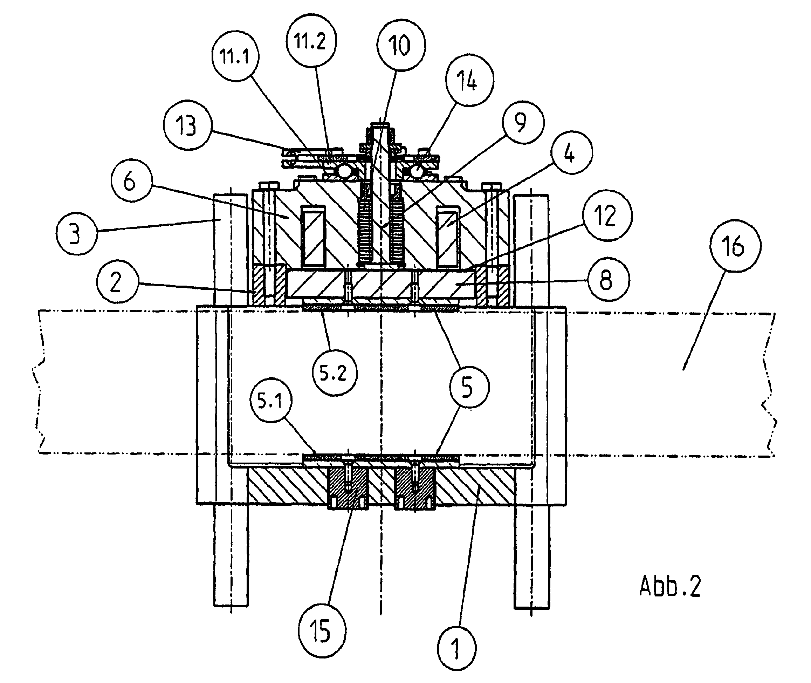

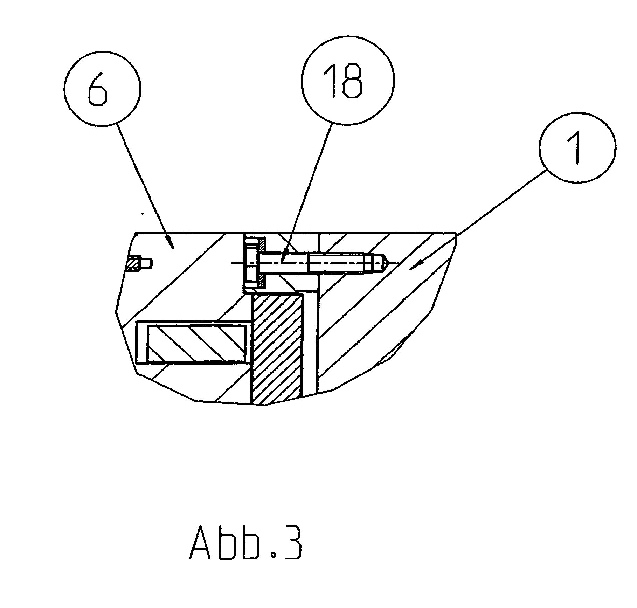

Die Bremse B besitzt nach Abb. 2 ein Gehäuse 1, das die Scheibe 16 umschließt. An dem Gehäuse 1 schließt sich ein Ring 2 an. Der Ring 2 umgibt die Scheibe 16 konzentrisch und kann aus unmagnetischem Material bestehen. Im Spulenträger 6 eines Elektromagneten ist eine Magnetspule 4 untergebracht. Reibbeläge 5, nämlich je ein Reibbelag 5.1 und 5.2, liegen axial seitlich der Scheibe 16. Eine Ankerscheibe 8 wird durch Druckfedern 10 um einen Bolzen 9, vorzugsweise Tellerfedern gegen die Scheibe 16 gedrückt. Mit 12 ist der Luftspalt zwischen dem Spulenträger 6 und der Ankerscheibe 8 bezeichnet. Ein Schwenkhebel 13, der als Handlüfthebel dient, arbeitet mit einem Kugelrastsystem 14 zusammen, das aus Kugeln besteht, die in kegelige Ausnehmungen an Scheiben 11.1 und 11.2 eingreifen. Schrauben 18 (Abb. 3) verbinden das Gehäuse 1 mit dem Spulenträger 6.

Die Wirkungsweise dieser Bremse ist wie folgt

Im Normalbetrieb, wenn die Scheibe 16 frei rotieren soll, ist die Ankerscheibe 8 durch die unter Strom stehende Magnetspule 4 gegen die Kraft der Federn 10 angezogen und von der Scheibe 16 abgehoben. Im gebremsten Zustand wird die Stromzuführung zur Magnetspule 4 unterbrochen und die Ankerscheibe 8 unter der Kraft der Federn 10 gegen die Scheibe 16 gepreßt, so daß die Reibbeläge 5.1 und 5.2 mit der Scheibe 16 in reibenden und bremsenden Eingriff kommen, d. h. die Scheibe 16 steht still und wird in dieser Bremsstellung gehalten.

Soll die abgebremste Scheibe 16 von Hand gelüftet werden, muß der Schwenkhebel 13 gedreht werden, so daß er über die Scheibe 11.2 und den Bolzen 9 entgegen der Federkraft 10 die Scheibe 16 freigibt. Die Kugeln des Kugelrastsystems 14 können aus den kegeligen Ausnehmungen der Scheiben 11.1 und 11.2 heraustreten und die Scheibe 11.2. anheben, so daß der Bolzen 9 in der Stellung des Lüftens von Hand verbleibt.

### Bezugszeichenliste

- B: Bremse
- 1: Gehäuse
- 2: Ring
- 3: Drehmoment-Übertragungs-Bolzen
- 4: Spule
- 5.1 und 5.2: Reibbeläge
- 6: Spulenträger
- 7: --
- 8: Ankerscheibe
- 9: Bolzen
- 10: Druckfedern/Tellerfedern
- 11.1 und 11.2: Scheiben
- 12: Luftspalt
- 13: Handlüftbügel/SchwenkhebeI
- 14: Kugelrastsystem
- 15: Nachstellvorrichtung
- 16: Abzubremsende Scheibe
- 17: Anschraubung
- 18: Schrauben

## Patentansprüche

1. Teilbelag-Federdruckbremse zum Angriff an einer rotierenden Scheibe (16) in Antrieben von Industrieanlagen, Liftanlagen und Seilbahnantrieben,
- mit einem in die Bremse integrierten Elektromagneten aus Spulenträger (6) und Magnet-Spule (4) zum Lüften der Bremse
- sowie mit einer mit dem Elektromagneten (6,4) zusammenwirkenden Ankerscheibe (8), die von im Spulenträger (6) angeordneten Druckfedern (10) von diesem axial weggedrückt wird, wobei
- die Bremse am Umfang der abzubremsenden Scheibe (16) diese U-förmig umgreifend parallel zur Achse der abzubremsenden Scheibe (16) verschieblich/schwimmend gelagert ist, und wobei
- der der einen Stirnfläche der abzubremsenden Scheibe (16) zugewandte Teil der Bremse mit einem mit der Stirnfläche der Scheibe (16) in Kontakt bringbaren Reibbelag (5.1) versehen ist,
**dadurch gekennzeichnet,**
- **daß** der der anderen Stirnfläche der abzubremsenden Scheibe gegenüberliegende Teil der Bremse die mit einem Reibbelag (5.2) versehene Ankerscheibe (8) der elektromagnetisch lüftbaren Federdruckbremse ist.

2. Federdruckbremse nach Anspruch 1, **dadurch gekennzeichnet, daß** die Ankerscheibe (8) von einem zentralen Bolzen (9) im Spulenträger (6) axial mit Federdruck beaufschlagt wird.

3. Federdruckbremse nach Anspruch 1 oder 2, **dadurch gekennzeichnet, daß** die Druckfedern (10) im Spulenträger (6) die Gestalt von um den Bolzen (9) herum angeordneten Tellerfedern haben.

4. Federdruckbremse nach einem der vorangehenden Ansprüche, **gekennzeichnet durch** einen am axial äußeren Ende des Bolzens (9) vorgesehenen Schwenkhebel (13) zum Verdrehen desselben zur Axialverstellung des Bolzens (9) **durch** ein Kugelrastsystem (14), das beim Austreten der Kugeln aus zugehörigen Vertiefungen den Bolzen (9) gegen die Kraft der Tellerfedern axial verstellt und somit eine manuelle Lüftung der Bremse ermöglichst.

5. Federdruckbremse nach Anspruch 4, **dadurch gekennzeichnet, daß** der Schwenkhebel (13) per Bowdenzug betätigbar ist.

6. Federdruckbremse nach einem der vorangehenden Ansprüche, **dadurch gekennzeichnet, daß** die Scheibe (16) direkt als Riemen-, Seil-, Treib-, oder Zahnrad-Scheibe ausgebildet ist.

## Claims

1. Partly lined spring pressure brake adapted to engage a rotating disk (16) in drive systems used in industrial installations, elevators and cable cars, comprising
- an electromagnet integrated in the brake and including a coil carrier (6) and a magnetic coil (4) for releasing the brake; and
- an armature disk (8) cooperating with said electromagnet (6, 4) and adapted to be urged axially away from coil carrier (6) by compression springs (10) disposed therein;
- said brake being disposed along the periphery of the disk (16) to be braked to extend around said disk in U-fashion and being supported for displacement/floating movement in a direction parallel with the axis of disk (16) to be braked; and
- the brake part turned towards one face of the disk (16) to be braked having thereon a friction lining (5.1) adapted to be contacted with said face of disk (16);
**characterized by**
- the brake part opposite the other face of the disk to be braked constituting an armature disk (8) of the electromagnetically releasable spring pressure brake, said armature disk having a friction lining (5.2) thereon.

2. Spring pressure brake as in claim 1, **characterized in that** armature disk (8) has axial spring pressure exerted thereonto by means of a central bolt (9) located inside coil carrier (6).

3. Spring pressure brake as in claim 1 or 2, **characterized in that** said compression springs (10) in coil carrier (6) are in the form of Belleville washers disposed to surround bolt (9).

4. Spring pressure brake as in any one of the preceding claims, **characterized by** a pivoting lever (13) provided at the axially outer end of bolt (9) for rotating said bolt so as to axially adjust it through a ball detent system (14) designed to axially displace bolt (9) as the balls leave associated depressions against the force exerted by said Belleville washers so as to enable the brake to be manually released.

5. Spring pressure brake as in claim 4, **characterized by** pivoting lever (13) being adapted to be actuated by a Bowden pull wire.

6. Spring pressure brake as in any one of the preceding claims, **characterized by** disk (16) being formed directly to be a belt sheave, a rope sheave, a driving wheel or a gear-type sheave.

## Revendications

1. Frein sous pression de ressort à garniture partielle destiné à venir en prise sur une poulie tournante (16) dans des entraînements d'installations industrielles, d'installations d'élévateurs et d'entraînements de remonte-pentes,
- comportant un électro-aimant, intégré dans le frein, constitué d'un porte-bobine (6) et d'une bobine magnétique (4) pour desserrer le frein
- ainsi que comportant un disque d'induit (8) coopérant avec l'électro-aimant (6, 4) qui, par des ressorts de pression (10) disposés dans le porte-bobine (6), est écarté axialement de ce dernier,
- le frein étant supporté de manière coulissante/flottante sur le pourtour de la poulie à freiner (16) entourant celle-ci en forme de U parallèlement à l'axe de la poulie à freiner (16), et
- la partie du frein tournée vers une face frontale de la poulie à freiner (16) étant pourvue d'une garniture de friction (5.1) pouvant être amenée en contact avec la face frontale de la poulie (16),
**caractérisé en ce**
- **que** la partie du frein opposée, située en vis-à-vis de l'autre face frontale de la poulie à freiner, est le disque d'induit (8) pourvu d'une garniture de friction (5.2) du frein à pression de ressort à desserrage électromagnétique.

2. Frein sous pression de ressort selon la revendication 1, **caractérisé en ce que** le disque d'induit (8) est contraint axialement par une force de ressort, par l'intermédiaire d'un goujon central (9) dans le porte-bobine (6).

3. Frein sous pression de ressort selon la revendication 1 ou 2, **caractérisé en ce que** les ressorts de pression (10) dans le porte-bobine (6) ont la forme de rondelles-ressorts disposées autour du goujon (9).

4. Frein sous pression de ressort selon l'une des revendications précédentes, **caractérisé par** un levier pivotant (13), prévu à l'extrémité axialement extérieure du goujon (9), pour leur rotation afin de déplacer axialement le goujon (9) par l'intermédiaire d'un système d'encliquetage à billes (14) qui, lorsque les billes sortent de creux correspondants, déplace axialement le goujon (9) contre la force des rondelles-ressorts et permet ainsi un desserrage manuel du frein.

5. Frein sous pression de ressort selon la revendication 4, **caractérisé en ce que** le levier pivotant (13) peut être actionné via un câble Bowden.

6. Frein sous pression de ressort selon l'une des revendications précédentes, **caractérisé en ce que** la poulie (16) est directement réalisée en poulie à courroie, à câble, poulie d'entraînement ou poulie à roue dentée.
